# EUROPEAN PATENT SPECIFICATION

(11) **EP 3 282 737 B1**
(45) Date of publication and mention of the grant of the patent: **24.07.2019**
(21) Application number: 17184314.7
(22) Date of filing: 01.08.2017
(51) Int. Cl.: H04W 12/06, G06F 21/35, H04L 9/08, H04L 9/14, H04L 29/06, H04L 9/32

(54) **INFORMATION PROCESSING DEVICE, AUTHENTICATION DEVICE, SYSTEM, INFORMATION PROCESSING METHOD, PROGRAM, AND AUTHENTICATION METHOD**
INFORMATIONSVERARBEITUNGSVORRICHTUNG, AUTHENTIFIZIERUNGSVORRICHTUNG, SYSTEM, INFORMATIONSVERARBEITUNGSVERFAHREN, PROGRAMM UND AUTHENTIFIZIERUNGSVERFAHREN
DISPOSITIF DE TRAITEMENT D'INFORMATIONS, DISPOSITIF D'AUTHENTIFICATION, SYSTÈME, PROCÉDÉ DE TRAITEMENT D'INFORMATIONS, PROGRAMME ET PROCÉDÉ D'AUTHENTIFICATION

(30) Priority: 10.08.2016 JP 2016158208
(43) Date of publication of application: 14.02.2018
(73) Proprietor: Fujitsu Limited, Kawasaki-shi, Kanagawa 211-8588 (JP)
(72) Inventor: YASAKI, Koichi, Kawasaki-shi, Kanagawa 211-8588 (JP); SAKAMOTO, Takuya, Kawasaki-shi, Kanagawa 211-8588 (JP); NIMURA, Kazuaki, Kawasaki-shi, Kanagawa 211-8588 (JP); NAKAMURA, Yosuke, Kawasaki-shi, Kanagawa 211-8588 (JP); ITO, Hidenobu, Kawasaki-shi, Kanagawa 211-8588 (JP)
(74) Representative: Haseltine Lake Kempner LLP

(56) References cited:
- EP-A1- 2 887 615
- AU-A1- 2015 218 507
- US-A1- 2013 311 768
- US-A1- 2014 230 026

## Description

The embodiments discussed herein are related to an information processing device, an information processing system, an authentication device, an information processing method, a program, and an authentication method.

Conventionally, devices, such as Internet of Things (IoT) devices, such as a sensor, a wristwatch, a camera, a printer, an electronic lock, or the like, which are coupled to the Internet and provide various types of services, have been known.

It has been known that, among the devices, some devices have a function of performing user authentication for security reasons. Patent Literature 4 discloses a computer program for authenticating a user, in which a first message including a session identifier is sent through an interface. In response, a message including the session identifier, a user identifier and at least a portion encrypted using a private key associated with a mobile device associated with the user is received. The user may then be authenticated using the portion encrypted using the private key. Patent Literature 5 discloses a method for unlocking a second device using a first device, wherein the first device pairs with the second device and establishes a trusted relationship. The first device is authenticated using a device key, and receives a secret key from the second device. The first device receives a user input, and in response transmits the secret key to the second device to unlock the second device.
[PATENT LITERATURE 1] Japanese Laid-open Patent Publication No. 2009-049464
[PATENT LITERATURE 2] Japanese Laid-open Patent Publication No. 2003-143136
[PATENT LITERATURE 3] Japanese Laid-open Patent Publication No. 2015-203947.
[PATENT LITERATURE 4] US 2013/0311768 A1
[PATENT LITERATURE 5] AU 2015218507 A1

### [SUMMARY]

In the devices, in performing user authentication, a dedicated hardware exclusively used for user authentication is desired to be added. The adding the dedicated hardware leads to increase in load, such as increase in cost, power consumption, or the like.

Therefore, it is desirable to provide a technology that enables reduction in load of a device that is operated by a user for performing user authentication.

According to aspects of embodiments, there are provided information processing devices, authentication devices, information processing methods, authentication methods, systems and programs, all as defined in the claims. The claims define the scope of the invention..

According to aspects of embodiments, it may be enabled to reduce the load of a device that is operated by a user for performing user authentication.

### [BRIEF DESCRIPTION OF DRAWINGS]

The invention is described, by way of example only, with reference to the following figures, in which:
FIG. 1 is a view illustrating a configuration example of an information processing system according to a first embodiment;
FIG. 2 is a diagram illustrating a hardware configuration example of an information processing device according to the first embodiment;
FIG. 3 is a diagram illustrating an example of a functional configuration of each of the information processing device and an information terminal according to the first embodiment;
FIG. 4 is a sequence diagram illustrating an example of setting processing of the information processing system according to the first embodiment;
FIG. 5 is a view illustrating an example of a list display screen of an authentication method in accordance with an event;
FIG. 6 is a table illustrating an example of an authentication information storage unit;
FIG. 7 is a table illustrating an example of an authentication event storage unit;
FIG. 8 is a sequence diagram illustrating an example of authentication processing of the information processing system;
FIG. 9 is a view illustrating a configuration example of an information processing system according to a second embodiment; and
FIG. 10 is a sequence diagram illustrating an example of setting processing of the information processing system according to the second embodiment.

### [DESCRIPTION OF EMBODIMENTS]

Embodiments of the present disclosure will be described below with reference to the accompanying drawings.

### [First Embodiment]

### <System Configuration>

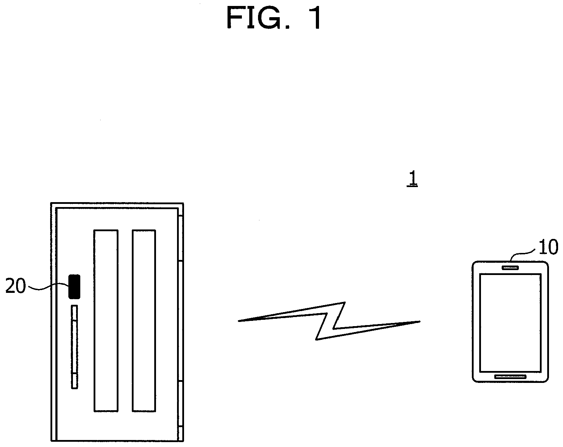

FIG. 1 is a view illustrating a configuration example of an information processing system according to a first embodiment. In FIG. 1, an information processing system 1 includes an information processing device 10 and an information terminal 20.

The information processing device 10 and the information terminal 20 are coupled to one another so as to be communicable with one another, for example, via a short-range wireless communication or a wireless local area network (LAN).

The information processing device 10 is, for example, a smartphone, a tablet type terminal, a personal computer (PC), or the like.

The information processing device 10 authenticates a user, based on biological information, such as a fingerprint, a face image, or the like, and notifies the information terminal 20 of an authentication result. Specifically, among smartphones or the like, ones which have a function of performing biological authentication, such as fingerprint authentication, face authentication, or the like, have been known. Also, a technology called Fast IDentity Online (FIDO) in which a user is authenticated by biological authentication and an authentication result thereof is reported to a server side has been known. According to FIDO, compared to a method in which a conventional password is notified to the server side and authentication is performed at the server side, a leakage of authentication information, such as a password or the like, from the server side does not occur. In this embodiment, the information processing device 10 provides a service of user authentication to the information terminal 20 using the above-described function.

The information terminal 20 is, for example, a sensor, a wristwatch, a camera, a printer, an electronic lock, or the like.

In accordance with an operation of a user or the like, the information terminal 20 requests the information processing device 10 for user authentication and acquires a result of user authentication from the information processing device 10.

### < Hardware Configuration>

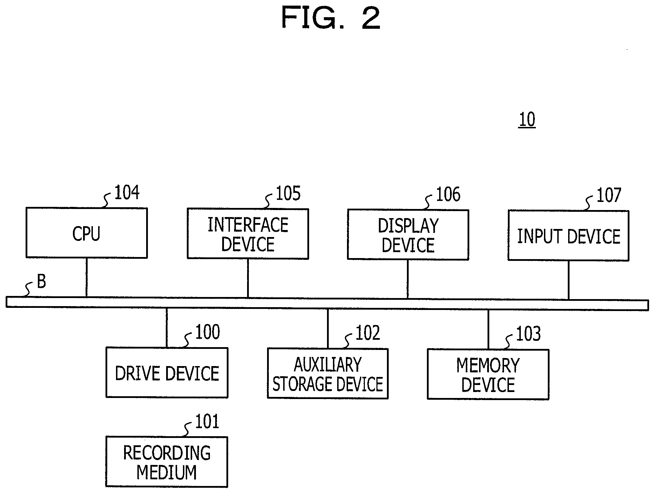

FIG. 2 is a diagram illustrating a hardware configuration example of the information processing device 10 according to the first embodiment. The information processing device 10 of FIG. 2 includes a drive device 100, an auxiliary storage device 102, a memory device 103, a CPU 104, an interface device 105, or the like, which are mutually coupled to one another via a bus B.

An information processing program that realizes processing in the information processing device 10 is provided by a recording medium 101. When the recording medium 101 in which the information processing program is recorded is set in the drive device 100, the information processing program is installed in the auxiliary storage device 102 from the recording medium 101 via the drive device 100. However, there may be a case where the information processing program is not installed from the recording medium 101, and the information processing program may be downloaded from some other computer via a network. The auxiliary storage device 102 stores the installed information processing program, and also, stores a file, data, or the like which are to be used.

When an instruction for starting up a program is given, the memory device 103 reads out the program from the auxiliary storage device 102 and stores the program. The CPU 104 realizes a function related to the information processing device 10 in accordance with the program stored in the memory device 103. The interface device 105 is used as an interface used for coupling with the network.

Note that, as an example of the recording medium 101, a portable recording medium, such as CD-ROM, a DVD disk, USB memory, or the like, is used. Also, as an example of the auxiliary storage device 102, a hard disk drive (HDD), flash memory, or the like is used. Each of the recording medium 101 and the auxiliary storage device 102 corresponds to a computer-readable recording medium.

Also, the information processing device 10 may include a hardware, such as a camera, a fingerprint acquiring device, or the like, which acquires biological information of a user.

A hardware configuration of the information terminal 20 may be similar to the hardware configuration example of the information processing device 10 illustrated in FIG. 2.

### <Functional Configuration>

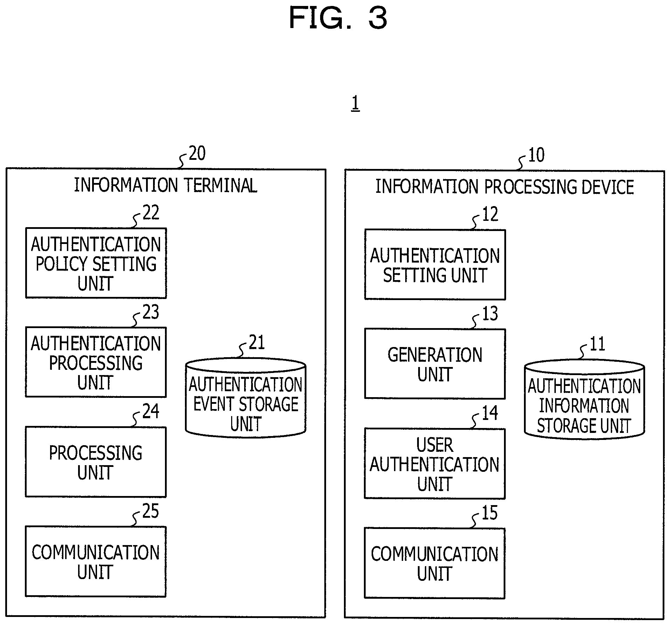

Next, with reference to FIG. 3, a functional configuration of each of the information processing device 10 and the information terminal 20 according to the first embodiment will be described. FIG. 3 is a diagram illustrating an example of a functional configuration of each of the information processing device 10 and the information terminal 20 according to the first embodiment.

### <<Information Processing Device>>

The information processing device 10 includes an authentication information storage unit 11. The authentication information storage unit 11 is realized, for example, using an auxiliary storage device or the like. Details of the authentication information storage unit 11 will be described later.

Also, the information processing device 10 includes an authentication setting unit 12, a generation unit 13, a user authentication unit 14, and a communication unit 15. Each of the units is realized by processing that each of one or more programs installed in the information processing device 10 causes the CPU of the information processing device 10 to execute.

The authentication setting unit 12 sets authentication information, such as a temporary ID (TID), an authentication method, or the like in accordance with an event of the information terminal 20 to the authentication information storage unit 11. Note that TID is information that identifies the event in the information terminal 20.

The generation unit 13 generates TID, a public key of a key, and a secret key of the key in accordance with the event of the information terminal 20.

The user authentication unit 14 performs user authentication using biological information, such as a fingerprint, a face image, or the like, or a password or the like.

When the communication unit 15 receives a beacon from the information terminal 20 in a stage of authentication processing, which will be described later, the communication unit 15 switches a communication mode from a peripheral mode in which a request from another device may be received to a host mode in which a request is transmitted to another device. Thus, a communication is performed between the information terminal 20 and the information processing device 10. When the information terminal 20 has a capability of switching its communication mode to the host mode, in accordance with an instruction of the communication unit 15, a communication unit 25 switches the communication mode to the host mode and the communication unit 15 switches the communication mode to the peripheral mode again. Thus, a request for user authentication from the information terminal 20 is received by the information processing device 10. When the information terminal 20 does not have a host function, the information processing device 10 polls the communication unit 25 without performing switching of a communication and receives a request for user authentication.

The communication unit 15 performs control of encryption or the like of a communication with the information terminal 20.

### <<Information Terminal>>

The information terminal 20 includes an authentication event storage unit 21. The authentication event storage unit 21 is realized, for example, using an auxiliary storage device or the like. Details of the authentication event storage unit 21 will be described later.

The information terminal 20 includes an authentication policy setting unit 22, an authentication processing unit 23, a processing unit 24, and the communication unit 25. Each of the units is realized by processing that each of one or more programs installed in the information terminal 20 causes the CPU of the information terminal 20 to execute.

The authentication policy setting unit 22 sets an authentication method for authenticating a user or the like in the information processing device 10 in accordance with an event of a predetermined operation or the like for which user authentication is to be performed in the information terminal 20 in the authentication event storage unit 21.

When the event of the predetermined operation for which user authentication is to be performed in the information terminal 20 or user authentication occurs in order for the information terminal 20 to receive an Internet service, the authentication processing unit 23 requests the information processing device 10 for user authentication and acquires a result of the user authentication.

If the result of user authentication, which has been acquired by the authentication processing unit 23, is successful, the processing unit 24 executes processing in accordance with the event of the predetermined operation or the like. Also, when user authentication for receiving an Internet service is performed, a user authentication result is transmitted to a service as it is.

The communication unit 25 performs control of encryption or the like of a communication with the information processing device 10.

### <Processing>

### <<Setting Processing>>

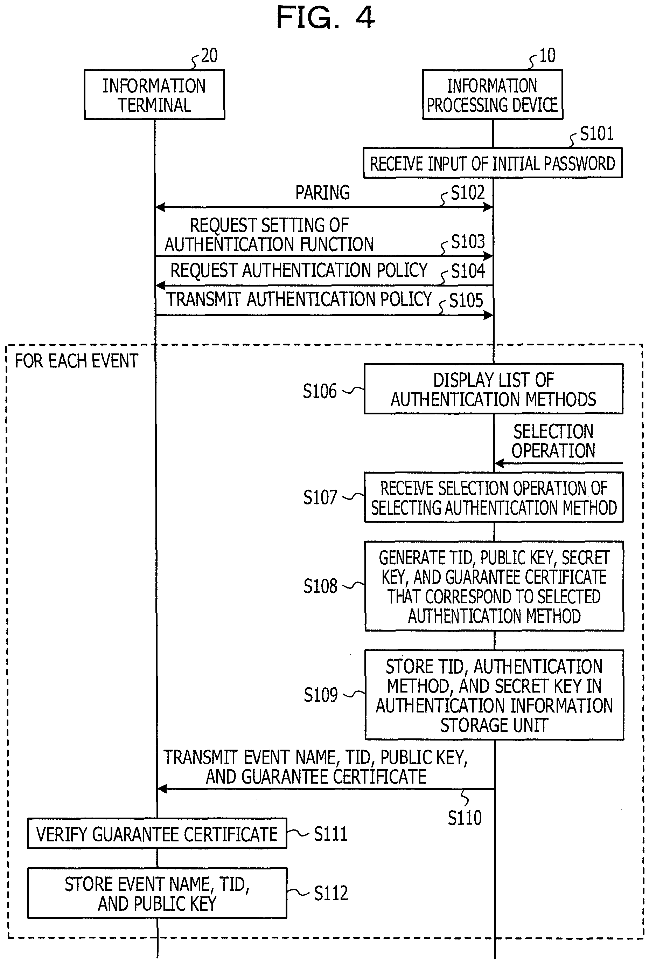

Next, with reference to FIG. 4, setting processing of the information processing system 1 according to the first embodiment will be described. Note that the setting process is preparatory processing which is performed before performing user authentication. FIG. 4 is a sequence diagram illustrating an example of setting processing of the information processing system 1 according to the first embodiment.

In Step S101, the authentication setting unit 12 of the information processing device 10 receives an input of an initial password set for the information terminal 20 from the user. Note that the initial password is a password set in advance at the time of shipping of the information terminal 20 or the like and, for example, is described in a manual of the information terminal 20 or the like.

Subsequently, the authentication setting unit 12 of the information processing device 10 performs communication connection (pairing) with the information terminal 20 using the password (Step S102).

Subsequently, the authentication policy setting unit 22 of the information terminal 20 requests the information processing device 10 for a setting of an authentication function (Step S103).

Subsequently, the authentication setting unit 12 of the information processing device 10 requests the information terminal 20 for an authentication policy (Step S104).

Subsequently, the authentication policy setting unit 22 of the information terminal 20 transmits the authentication policy to the information processing device 10 (Step S105).

In this case, the authentication policy includes an event name and information of an authentication method. The event name is the name of an operation (an event) that is planned for the information terminal 20 and is, for example, when the information terminal 20 is an electronic lock, is "unlock", "lock", or the like. The authentication method is information that indicates a method for user authentication and is, for example, "biological authentication", "no authentication", "biological information protection by hardware", or the like.

Step S106 to Step S111, which will be described below, are executed for each event name included in the authentication policy. An event that is a processing target will be hereinafter referred to as a "target event".

Subsequently, the authentication setting unit 12 of the information processing device 10 selects an authentication method that matches an authentication method included in the received authentication policy from a group of authentication methods that may be executed in the information processing device 10 and displays a list of the selected authentication methods (Step S106).

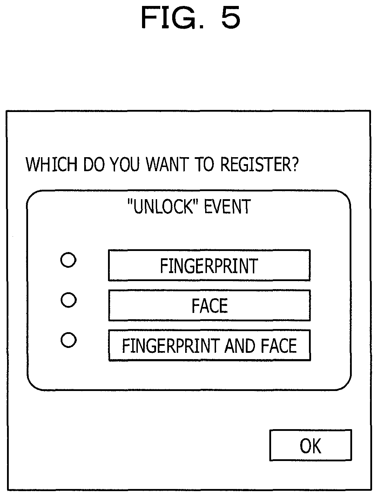

FIG. 5 is an example of a list display screen of authentication methods in accordance with an event. In FIG. 5, an example of a display screen of the information processing device 10 when "unlock", and "biological authentication" and "biological information protection by hardware" are designated as the name of a target event, and the authentication method, respectively, from the information terminal 20.

Subsequently, the authentication setting unit 12 of the information processing device 10 receives a selection operation of selecting an authentication method from the user (Step S107).

Subsequently, the generation unit 13 of the information processing device 10 generates a temporary ID (TID), a public key of a key, a secret key of the key, a guarantee certificate that correspond to the target event (Step S108).

In this case, TID includes, for example, information that identifies the information terminal 20, information that identifies the authentication method, a random number used for alteration check for a communication address of the information terminal 20, of the like.

The guarantee certificate includes information that guarantees that a condition of the authentication method requested by the information terminal 20 is satisfied.

Note that, when biological information that corresponds to the authentication method selected in the Step S106 has not been registered, a registration of biological information is received from the user.

Subsequently, the authentication setting unit 12 of the information processing device 10 stores the TID, the authentication method selected in the Step S106, and the secret key of the key in association with one another in the authentication information storage unit 11 (Step S109).

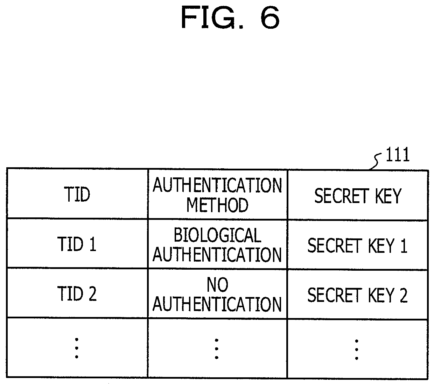

FIG. 6 is a table illustrating an example of the authentication information storage unit 11. In the authentication information storage unit 11, the TID, the authentication method, and the secret key are stored in association with one another.

Subsequently, the authentication setting unit 12 of the information processing device 10 transmits the event name of the target event, the TID, the public key of the key, the secret key of the key, the guarantee certificate to the information terminal 20 (Step S110).

Subsequently, the authentication policy setting unit 22 of the information terminal 20 verifies the received guarantee certificate (Step S111). Note that, when the guarantee certificate has been encrypted by the secret key of the key, verification of the guarantee certificate may be performed by decrypting the guarantee certificate using the received public key of the key.

Subsequently, the authentication policy setting unit 22 of the information terminal 20 stores the TID and the public key of the key, which have been received, in the authentication event storage unit 21 (Step S112).

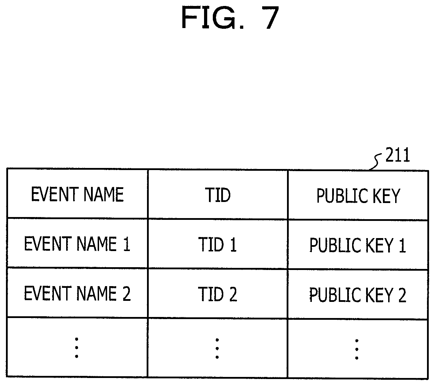

FIG. 7 is a table illustrating an example of the authentication event storage unit 21. In the authentication event storage unit 21, the event name, the TID, and the public key of the key are stored in association with one another for each event.

### <Modified Example>

The authentication information storage unit 11 and the authentication event storage unit 21 may be updated with a plurality of timings, such as, for example, a regular timing or the like. In this case, for example, the generation unit 13 of the information processing device 10 generates the public key of the key and the secret key of the key at a timing of a predetermined cycle or the like.

Then, the authentication setting unit 12 of the information processing device 10 updates data of the key associated with a predetermined TID in the authentication information storage unit 11 using the generated key, and notifies the information terminal 20 of the TID and the public key of the key.

Then, the authentication policy setting unit 22 of the information terminal 20 updates the public key of the key associated with the received TID in the authentication event storage unit 21.

Thus, the resistance to an attack to the key is increased.

### <<Authentication Processing>>

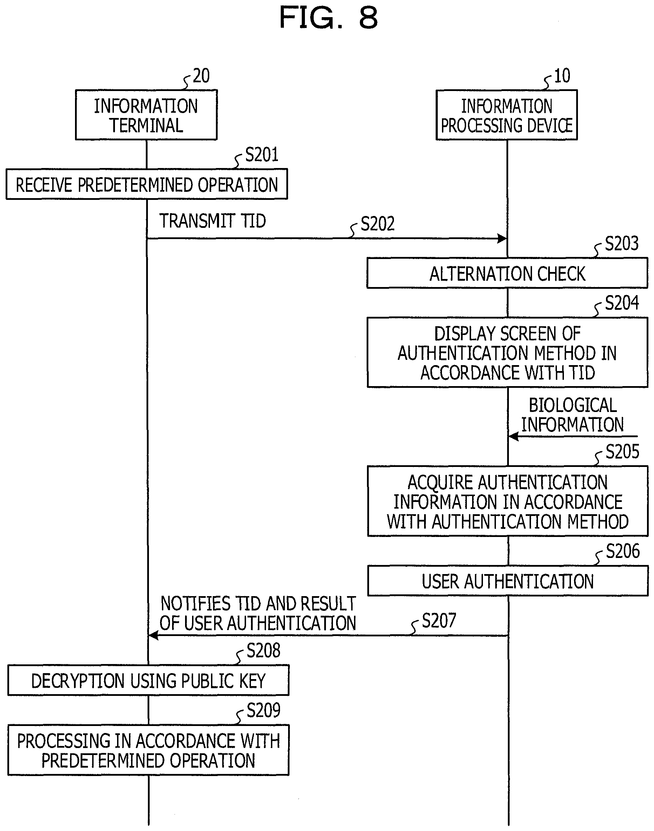

Next, with reference to FIG. 8, authentication processing of the information processing system 1 in accordance with the first embodiment will be described. FIG. 8 is a sequence diagram illustrating an example of authentication processing of the information processing system 1.

In Step S201, the processing unit 24 of the information terminal 20 receives a predetermined operation from the user.

Subsequently, the authentication processing unit 23 of the information terminal 20 transmits a TID associated with an event of the predetermined operation in the authentication event storage unit 21 to the information processing device 10 via the communication unit 25 (Step S202). In this case, the communication unit 25 encrypts identification information used for a communication of the information terminal 20 using the TID. For example, the communication unit 25 encrypts at least a part of an MAC address of the information terminal 20 or the like using at least a part of the TID as a random number.

Subsequently, the communication unit 15 of the information processing device 10 checks, using the received TID, whether or not the identification information used for the communication of the information terminal 20 has been altered (Step S203).

Subsequently, the user authentication unit 14 of the information processing device 10 selects the authentication method associated with the received TID from the authentication information storage unit 11 and displays a screen in accordance with the selected authentication method (Step S204). In the screen, for example, a message that urges the user to input biological information, a password, or the like in accordance with the authentication method.

Subsequently, the user authentication unit 14 of the information processing device 10 acquires, from the user, biological information in accordance with the selected authentication method (Step S205).

Subsequently, the user authentication unit 14 of the information processing device 10 performs user authentication, such as biological authentication or the like (Step S206).

Subsequently, the communication unit 15 of the information processing device 10 encrypts the TID and a result of the user authentication using the secret key stored in the authentication information storage unit 11 in association with the TID and notifies the information terminal 20 of the TID and the result that have been encrypted (Step S207). The result of the user authentication is information that indicates a success or a failure of the user authentication.

Subsequently, the authentication processing unit 23 of the information terminal 20 decrypts the TID and a result of biological authentication using the public key of the key (Step S208).

Subsequently, if decryption was successful and the decrypted result of the biological authentication was successful, the processing unit 24 of the information terminal 20 performs processing in accordance with the predetermined operation received in Step S201 (Step S209). For example, when the information terminal 20 is an electronic lock and the predetermined operation is an unlocking operation, the processing unit 24 performs unlocking.

On the other hand, if decryption failed, or if decryption was successful but the decrypted result of biological authentication was a failure, the processing unit 24 does not perform the processing in accordance with the predetermined operation. This is because a failure of decryption failed indicates that the authentication result was not a notification from the information processing device 10, which that has been registered in advance for the purpose of authenticating the user of the information terminal 20.

Note that management of an API used for authentication in this embodiment is performed separately from management of another API and, while authentication processing is being performed, the information terminal 20 limits calls to other APIs than the API used for authentication. Thus, if an unauthorized application has been installed in the information processing device 10, a call of the predetermined API from the application is limited.

### [Second Embodiment]

In the first embodiment, an example in which, in setting processing, a TID or the like is directly set from the information processing device 10 to the information terminal 20 has been described. In a second embodiment, an example in which, in setting processing, a TID or the like is set to the information terminal 20 from the information processing device 10 via a server device 30 will be described. Note that, except for a part, the second embodiment is similar to the first embodiment, and therefore, the description of the second embodiment will be omitted as appropriate.

### <System Configuration>

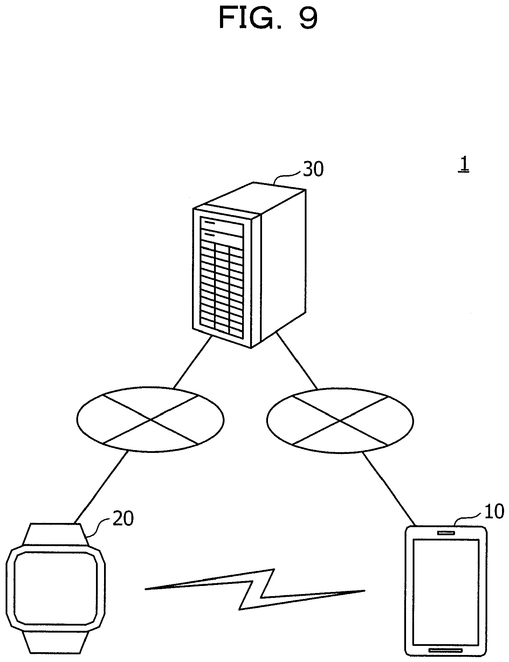

FIG. 9 is a view illustrating a configuration example of an information processing system according to the second embodiment. In FIG. 9, an information processing system 1 according to the second embodiment further includes the server device 30.

Each of the information processing device 10 and the information terminal 20 is coupled to the server device 30, for example, via the Internet or a mobile phone network so as to be communicable with one another.

### <Processing>

### <<Setting Processing>>

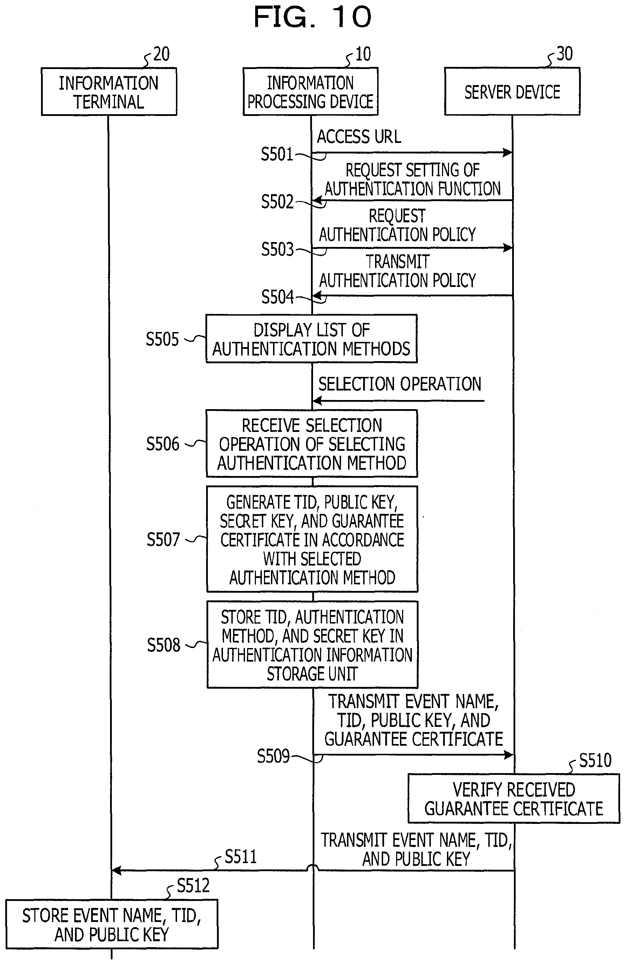

Next, with reference to FIG. 10, setting processing of the information processing system 1 according to the second embodiment will be described. FIG. 10 is a sequence diagram illustrating an example of setting processing of the information processing system 1 according to the second embodiment.

First, for example, an IT administrator or the like sets an initial password of the information terminal 20 or the like to the server device 30 and attaches a two-dimensional barcode including information of an URL issued from the server device 30 to the information terminal 20 in advance. Then, for example, the IT administrator or the like installs a device certificate issued from the server device 30 in the information processing device 10 in accordance with a request from a user in advance. Then, for example, the IT administrator or the like registers the device certificate and the ID of the information terminal 20 in association with one another in the server device 30 in advance, and thereby, performs setting that allows an access to the information terminal 20 from the information processing device 10.

The above-described setting is performed in advance and then the following processing is performed.

In Step S501, the information processing device 10 reads information of the two-dimensional barcode attached to the information terminal 20 and accesses the URL included in the information of the two-dimensional barcode.

In this case, if "the event name, the TID, and the public key" of the information processing device 10 have been already registered in the server device 30, the processing of S502 to S509 may be omitted and the information processing device 10 may be set using information that has been already registered in S511.

Subsequently, the server device 30 requests the information processing device 10 for a setting of an authentication function (Step S502).

Subsequently, the authentication setting unit 12 of the information processing device 10 requests the server device 30 for an authentication policy (Step S503).

Subsequently, the server device 30 transmits the authentication policy to the information processing device 10 (Step S504).

Step S505 to Step S511 below are executed for each event name included in the authentication policy. An event that is a processing target will be hereinafter referred to as a "target event".

Subsequently, the authentication setting unit 12 of the information processing device 10 selects an authentication method that matches an authentication method included in the received authentic policy from a group of authentication methods that may be executed in the information processing device 10 and displays a list of the selected authentication methods (Step S505).

Subsequently, the authentication setting unit 12 of the information processing device 10 receives a selection operation of selecting an authentication method from the user (Step S506).

Subsequently, the generation unit 13 of the information processing device 10 generates a temporary ID (TID), a public key of a key, a secret key of the key, and a guarantee certificate that correspond to the target event (Step S507).

Note that, if biological information that corresponds to the authentication method selected in Step S106 has not been registered, a registration of biological information is received from the user.

Subsequently, the authentication setting unit 12 of the information processing device 10 stores the TID, the authentication method selected in the Step S106, and the secret key of the key in association with one another in the authentication information storage unit 11 (Step S508).

Subsequently, the authentication setting unit 12 of the information processing device 10 transmits the event name of the target event, the TID, the public key of the key, and the guarantee certificate to the information terminal 20 (Step S509).

Subsequently, the server device 30 verifies the received guarantee certificate (Step S510). Note that, if the guarantee certificate has been encrypted using the secret key of the key, verification of the guarantee certificate may be performed by performing decryption using the public key of the key which has been received.

Subsequently, the server device 30 notifies the information terminal 20 of the event name, the TID, and the public key of the key (Step S511).

Subsequently, the authentication policy setting unit 22 of the information terminal 20 stores the authentication policy, the TID, and the public key of the key in the authentication event storage unit 21 (Step S512).

Note that each of the information terminal 20, the information processing device 10, the authentication event storage unit 21, and the authentication processing unit 23 in each of the above-described embodiments is an example of the corresponding one of an "information processing device", an "authentication device", a "storage unit", and a "receiving unit".

Each of the authentication information storage unit 11, the user authentication unit 14, and the communication unit 15 in each of the above-described embodiments is an example of the corresponding one of a "storage unit", an "authentication unit", and a "transmission unit".

Although embodiments of the present disclosure have been described in detail above, the present disclosure is not limited to specific embodiments and various modifications and changes may be made to those embodiments without departing from the scope of the present disclosure as set forth in the claims.

Each function unit of the information processing device 10, the information terminal 20, and the server device 30 may be realized by cloud computing configured by, for example, one or more computers.

### <Modified Example>

The authentication information storage unit 11 may be updated regardless of the authentication event storage unit 21. In this case, for example, the generation unit 13 of the information processing device 10 generates a public key of a key and a secret key of the key at a timing intended by the user or the like.

Then, the authentication setting unit 12 of the information processing device 10 updates data of a key associated with a predetermined TID in the authentication information storage unit 11 using the generated key and notifies the server device 30 of the TID and the public key of the key.

Thus, when the information terminal 20 temporarily stores a user authentication result from the information processing device 10 in order to receive an Internet service, the authentication result is immediately invalidated.

### [REFERENCE SIGNS LIST]

- 10: information processing device
- 11: authentication information storage unit
- 12: authentication setting unit
- 13: generation unit
- 14: user authentication unit
- 15: communication unit
- 20: information terminal
- 21: authentication event storage unit
- 22: authentication policy setting unit
- 23: authentication processing unit
- 24: processing unit
- 25: communication unit
- 30: server device

## Claims

1. An information terminal (20) configured to communicate with an information processing device (10), the information terminal (20) comprising:
an authentication policy setting unit (22) configured to receive, from the information processing device (10), identification information and key information that have been generated by the information processing device (10) that is to perform authentication of a user of the information processing device (10) in association with an event that occurs in accordance with an operation of the information terminal (20), which is performed by the user, wherein the identification information identifies an authentication method performed using the information processing device (10);
an authentication event storage unit (21) configured to store the identification information, the key information and the event in association with each other ;
a communication unit (25) configured:
to transmit, when it is detected that the event occurs, the identification information stored in association with the event in the authentication event storage unit (21) to the information processing device (10); and
to receive an encrypted notification, including a result of the authentication of the user by the authentication method according to the identification information in the information processing device (10), from the information processing device (10);
an authentication processing unit (23) configured to decrypt the encrypted notification using the key information stored in the authentication event storage unit (21); and
a processing unit (24) configured, when the decrypted notification indicates that the result of the authentication of the user was a successful authentication, to execute, processing in accordance with the event that has occurred.

2. The information terminal (20) according to claim 1, wherein the communication unit (25) is configured to encrypt, using the identification information, identification information used for a communication of the information terminal (20), and to transmit the encrypted identification information to the information processing device (10).

3. An information processing device (10) configured to communicate with an information terminal (20), the information processing device (10) comprising:
an authentication information storage unit (11) configured to store identification information and key information in association with one another, wherein the identification information identifies an authentication method that corresponds to an event that occurs in accordance with an operation of the information terminal (20), which is performed by a user, and is shared with the information terminal (20) in association with the authentication method;
a user authentication unit (14) configured to perform, when the user authentication unit (14) receives the identification information that corresponds to the event that has occurred in accordance with the operation from the information terminal (20) operated by the user, authentication of the user by the authentication method stored in association with the identification information in the authentication information storage unit (11); and
a communication unit (15) configured: to encrypt the result of the authentication performed by the user authentication unit (14) using the key information stored in association with the identification information received from the information terminal (20); and to transmit a result of the authentication performed by the user authentication unit (14) to the information terminal (20).

4. A system comprising:
an information terminal (20) according to any of claims 1 and 2; and
an information processing device (10) according to claim 3.

5. An information processing method executed by an information terminal (20) which communicates with an information processing device (10), the information processing method comprising:
receiving, from the information processing device (10), identification information and key information that have been generated by the information processing device (10) that is to perform authentication of a user of the information processing device (10) in association with an event that occurs in accordance with an operation of the information terminal (20), which is performed by the user, wherein the identification information identifies an authentication method performed using the information processing device (10);
storing the identification information, the key information and the event in association with each other;
transmitting, when it is detected that the event occurs, the identification information stored in association with the event to the information processing device (10);
receiving an encrypted notification, including a result of the authentication of the user by the authentication method according to the identification information in the information processing device (10), from the information processing device (10);
decrypting the encrypted notification using the stored key information; and
executing, when the decrypted notification indicates that the result of the authentication of the user was a successful authentication, processing in accordance with the event that has occurred.

6. A program which, when executed on the information terminal (20), causes the information terminal (20) to carry out an information processing method according to claim 5.

7. An authentication method executed by an information processing device (10) which communicates with an information terminal (20), the authentication method comprising:
storing identification information and key information in association with one another, wherein the identification information identifies an authentication method that corresponds to an event that occurs in accordance with an operation of the information terminal (20), which is performed by a user, and is shared with the information terminal (20) in association with the authentication method;
performing, when the identification information that corresponds to the event that has occurred in accordance with the operation from the information terminal (20) operated by the user is received, authentication of the user by the authentication method stored in association with the identification information;
encrypting the result of the authentication performed using the key information stored in association with the identification information; and
transmitting a result of the authentication to the information terminal (20).

8. A program which, when executed on the information processing device (10), causes the information processing device (10) to carry out an authentication method according to claim 7.

## Patentansprüche

1. Informationsendgerät (20), das konfiguriert ist, mit einer Informationsverarbeitungsvorrichtung (10) zu kommunizieren, wobei das Informationsendgerät (20) umfasst:
eine Authentifizierungsrichtlinieneinstelleinheit (22), die konfiguriert ist, von der Informationsverarbeitungsvorrichtung (10) Identifikationsinformationen und Schlüsselinformationen zu empfangen, die von der Informationsverarbeitungsvorrichtung (10) erzeugt wurden, die Authentifizierung eines Benutzers der Informationsverarbeitungsvorrichtung (10) in Zuordnung zu einem Ereignis durchzuführen hat, das gemäß einem Vorgang des Informationsendgeräts (20) auftritt, der von dem Benutzer durchgeführt wird, wobei die Identifikationsinformationen ein Authentifizierungsverfahren identifizieren, das unter Verwendung der Informationsverarbeitungsvorrichtung (10) durchgeführt wird;
eine Authentifizierungsereignisspeichereinheit (21), die konfiguriert ist, die Identifikationsinformationen, die Schlüsselinformationen und das Ereignis in Zuordnung zueinander zu speichern;
eine Kommunikationseinheit (25), die konfiguriert ist:
wenn erkannt wird, dass das Ereignis auftritt, die Identifikationsinformationen, die in Zuordnung zu dem Ereignis in der Authentifizierungsereignisspeichereinheit (21) gespeichert sind, an die Informationsverarbeitungsvorrichtung (10) zu senden; und
eine verschlüsselte Benachrichtigung, die ein Resultat der Authentifizierung des Benutzers durch das Authentifizierungsverfahren gemäß den Identifikationsinformationen in der Informationsverarbeitungsvorrichtung (10) ist, von der Informationsverarbeitungsvorrichtung (10) zu empfangen;
eine Authentifizierungsverarbeitungseinheit (23), die konfiguriert ist, die verschlüsselte Benachrichtigung unter Verwendung der Schlüsselinformationen, die in der Authentifizierungsereignisspeichereinheit (21) gespeichert sind, zu entschlüsseln; und
eine Verarbeitungseinheit (24), die konfiguriert ist, wenn die entschlüsselte Benachrichtigung angibt, dass das Resultat der Authentifizierung des Benutzers eine erfolgreiche Authentifizierung war, Verarbeiten gemäß dem Ereignis, das aufgetreten ist, auszuführen.

2. Informationsendgerät (20) nach Anspruch 1, wobei die Kommunikationseinheit (25) konfiguriert ist, unter Verwendung der Identifikationsinformationen, Identifikationsinformationen, die für eine Kommunikation des Informationsendgeräts (20) verwendet werden, zu verschlüsseln, und die verschlüsselten Identifikationsinformationen an die Informationsverarbeitungsvorrichtung (10) zu senden.

3. Informationsverarbeitungsvorrichtung (10), die konfiguriert ist, mit einem Informationsendgerät (20) zu kommunizieren, wobei die Informationsverarbeitungsvorrichtung (10) umfasst:
eine Authentifizierungsinformationsspeichereinheit (11), die konfiguriert ist, Identifikationsinformationen und Schlüsselinformationen in Zuordnung zueinander zu speichern, wobei die Identifikationsinformationen ein Authentifizierungsverfahren identifizieren, das einem Ereignis entspricht, das gemäß einem Vorgang des Informationsendgeräts (20) auftritt, der von einem Benutzer durchgeführt wird, und mit dem Informationsendgerät (20) in Zuordnung zu dem Authentifizierungsverfahren geteilt wird;
eine Benutzerauthentifizierungseinheit (14), die konfiguriert ist, wenn die Benutzerauthentifizierungseinheit (14) die Identifikationsinformationen empfängt, die dem Ereignis entsprechen, das gemäß dem Vorgang aus dem Informationsendgerät (20), das von dem Benutzer bedient wird, aufgetreten ist, Authentifizierung des Benutzers durch das Authentifizierungsverfahren durchzuführen, das in Zuordnung zu den Identifikationsinformationen in der Authentifizierungsinformationenspeichereinheit (11) gespeichert ist; und
eine Kommunikationseinheit (15), die konfiguriert ist: das Resultat der Authentifizierung, die von der Benutzerauthentifizierungseinheit (14) durchgeführt wurde, unter Verwendung der Schlüsselinformationen zu verschlüsseln, die in Zuordnung zu den Identifikationsinformationen, die von dem Informationsendgerät (20) empfangen wurden, gespeichert sind; und ein Resultat der Authentifizierung, die von der Benutzerauthentifizierungseinheit (14) durchgeführt wurde, an das Informationsendgerät (20) zu senden.

4. System, umfassend:
ein Informationsendgerät (20) nach einem der Ansprüche 1 und 2; und
eine Informationsverarbeitungsvorrichtung (10) nach Anspruch 3.

5. Informationsverarbeitungsverfahren, das von einem Informationsendgerät (20) ausgeführt wird, das mit einer Informationsverarbeitungsvorrichtung (10) kommuniziert, wobei das Informationsverarbeitungsverfahren umfasst:
Empfangen, von der Informationsverarbeitungsvorrichtung (10), von Identifikationsinformationen und Schlüsselinformationen, die von der Informationsverarbeitungsvorrichtung (10) erzeugt wurden, die Authentifizierung eines Benutzers der Informationsverarbeitungsvorrichtung (10) in Zuordnung zu einem Ereignis durchzuführen hat, das gemäß einem Vorgang des Informationsendgeräts (20) auftritt, der von dem Benutzer durchgeführt wird, wobei die Identifikationsinformationen ein Authentifizierungsverfahren identifizieren, das unter Verwendung der Informationsverarbeitungsvorrichtung (10) durchgeführt wird;
Speichern der Identifikationsinformationen, der Schlüsselinformationen und des Ereignisses in Zuordnung zueinander;
Senden, wenn erkannt wird, dass das Ereignis auftritt, der Identifikationsinformationen, die in Zuordnung zu dem Ereignis gespeichert sind, an die Informationsverarbeitungsvorrichtung (10);
Empfangen einer verschlüsselten Benachrichtigung, die ein Resultat der Authentifizierung des Benutzers durch das Authentifizierungsverfahren gemäß den Identifikationsinformationen in der Informationsverarbeitungsvorrichtung (10) beinhaltet, von der Informationsverarbeitungsvorrichtung (10);
Entschlüsseln der verschlüsselten Benachrichtigung unter Verwendung der gespeicherten Schlüsselinformationen; und
Ausführen, wenn die entschlüsselte Benachrichtigung angibt, dass das Resultat der Authentifizierung des Benutzers eine erfolgreiche Authentifizierung war, von Verarbeiten gemäß dem Ereignis, das aufgetreten ist.

6. Programm, das, wenn es auf dem Informationsendgerät (20) ausgeführt wird, das Informationsendgerät (20) veranlasst, ein Informationsverarbeitungsverfahren gemäß Anspruch 5 durchzuführen.

7. Authentifizierungsverfahren, das von einer Informationsverarbeitungsvorrichtung (10) ausgeführt wird, die mit einem Informationsendgerät (20) kommuniziert, wobei das Authentifizierungsverfahren umfasst:
Speichern von Identifikationsinformationen und Schlüsselinformationen in Zuordnung zueinander, wobei die Identifikationsinformationen ein Authentifizierungsverfahren identifizieren, das einem Ereignis entspricht, das gemäß einem Vorgang des Informationsendgeräts (20) auftritt, der von einem Benutzer durchgeführt wird, und mit dem Informationsendgerät (20) in Zuordnung zu dem Authentifizierungsverfahren geteilt wird;
Durchführen, wenn die Identifikationsinformationen, die dem Ereignis entsprechen, das gemäß dem Vorgang aus dem Informationsendgerät (20), das von dem Benutzer bedient wird, aufgetreten ist, empfangen werden, von Authentifizierung des Benutzers durch das Authentifizierungsverfahren, das in Zuordnung zu den Identifikationsinformationen gespeichert ist;
Verschlüsseln des Resultats der Authentifizierung, die unter Verwendung der Schlüsselinformationen durchgeführt wurde, die in Zuordnung zu den Identifikationsinformationen gespeichert wurden; und
Senden eines Resultats der Authentifizierung an das Informationsendgerät (20).

8. Programm, das, wenn es auf der Informationsverarbeitungsvorrichtung (10) ausgeführt wird, die Informationsverarbeitungsvorrichtung (10) veranlasst, ein Authentifizierungsverfahren nach Anspruch 7 durchzuführen.

## Revendications

1. Terminal d'information (20) configuré pour communiquer avec un dispositif de traitement d'informations (10), le terminal d'information (20) comprenant :
une unité de définition de politique d'authentification (22) configurée pour recevoir, à partir du dispositif de traitement d'informations (10), des informations d'identification et des informations de clé qui ont été générées par le dispositif de traitement d'informations (10) qui doit effectuer l'authentification d'un utilisateur du dispositif de traitement d'informations (10) en association avec un événement qui se produit conformément à une opération du terminal d'information (20), qui est effectuée par l'utilisateur, dans lequel les informations d'identification identifient un procédé d'authentification exécuté à l'aide du dispositif de traitement d'informations (10) ;
une unité de stockage d'événement d'authentification (21) configurée pour stocker les informations d'identification, les informations de clé et l'événement en association les uns avec les autres ;
une unité de communication (25) configurée :
pour transmettre, lorsqu'il est détecté que l'événement se produit, les informations d'identification stockées en association avec l'événement dans l'unité de stockage d'événement d'authentification (21) au dispositif de traitement d'informations (10) ; et
pour recevoir une notification cryptée, comprenant un résultat de l'authentification de l'utilisateur par le procédé d'authentification en fonction des informations d'identification dans le dispositif de traitement d'informations (10), en provenance du dispositif de traitement d'informations (10) ;
une unité de traitement d'authentification (23) configurée pour décrypter la notification cryptée en utilisant les informations de clé stockées dans l'unité de stockage d'événement d'authentification (21) ; et
une unité de traitement (24) configurée, lorsque la notification décryptée indique que le résultat de l'authentification de l'utilisateur était une authentification réussie, pour exécuter un traitement en fonction de l'événement qui s'est produit.

2. Terminal d'information (20) selon la revendication 1, dans lequel l'unité de communication (25) est configurée pour crypter, en utilisant les informations d'identification, des informations d'identification utilisées pour une communication du terminal d'information (20), et pour transmettre les informations d'identification cryptées au dispositif de traitement d'informations (10).

3. Dispositif de traitement d'informations (10) configuré pour communiquer avec un terminal d'information (20), le dispositif de traitement d'informations (10) comprenant :
une unité de stockage d'informations d'authentification (11) configurée pour stocker des informations d'identification et des informations de clé en association les unes avec les autres, dans lequel les informations d'identification identifient un procédé d'authentification qui correspond à un événement qui se produit conformément à une opération du terminal d'information (20), qui est effectuée par un utilisateur et qui est partagée avec le terminal d'information (20) en association avec le procédé d'authentification ;
une unité d'authentification d'utilisateur (14) configurée pour effectuer, lorsque l'unité d'authentification d'utilisateur (14) reçoit les informations d'identification qui correspondent à l'événement qui s'est produit conformément à l'opération depuis le terminal d'information (20) opérée par l'utilisateur, l'authentification de l'utilisateur par l'intermédiaire du procédé d'authentification stocké en association avec les informations d'identification dans l'unité de stockage d'informations d'authentification (11) ; et
une unité de communication (15) configurée pour : crypter le résultat de l'authentification effectuée par l'unité d'authentification d'utilisateur (14) en utilisant les informations de clé stockées en association avec les informations d'identification reçues du terminal d'information (20) ; et pour transmettre un résultat de l'authentification effectuée par l'unité d'authentification d'utilisateur (14) au terminal d'information (20).

4. Système comprenant :
un terminal d'information (20) selon l'une quelconque des revendications 1 et 2 ; et un dispositif de traitement d'informations (10) selon la revendication 3.

5. Procédé de traitement d'informations exécuté par un terminal d'information (20) qui communique avec un dispositif de traitement d'informations (10), le procédé de traitement d'informations comprenant les étapes consistant à :
recevoir, à partir du dispositif de traitement d'informations (10), des informations d'identification et des informations de clé qui ont été générées par le dispositif de traitement d'informations (10) qui doit effectuer l'authentification d'un utilisateur du dispositif de traitement d'informations (10) en association avec un événement qui se produit conformément à une opération du terminal d'information (20), qui est effectuée par l'utilisateur, dans lequel les informations d'identification identifient un procédé d'authentification exécuté à l'aide du dispositif de traitement d'informations (10) ;
stocker les informations d'identification, les informations de clé et l'événement en association les uns avec les autres ;
transmettre, lorsqu'il est détecté que l'événement se produit, les informations d'identification stockées en association avec l'événement au dispositif de traitement d'informations (10) ;
recevoir une notification cryptée, comprenant un résultat de l'authentification de l'utilisateur par le procédé d'authentification en fonction des informations d'identification dans le dispositif de traitement d'informations (10), en provenance du dispositif de traitement d'informations (10) ;
déchiffrer la notification cryptée en utilisant les informations de clé stockées ; et
exécuter, lorsque la notification déchiffrée indique que le résultat de l'authentification de l'utilisateur a été une authentification réussie, un traitement en fonction de l'événement qui s'est produit.

6. Programme qui, lorsqu'il est exécuté sur le terminal d'information (20), amène le terminal d'information (20) à exécuter un procédé de traitement d'informations selon la revendication 5.

7. Procédé d'authentification exécuté par un dispositif de traitement d'informations (10) qui communique avec un terminal d'information (20), le procédé d'authentification comprenant les étapes consistant à :
stocker des informations d'identification et des informations de clé en association les unes avec les autres, dans lequel les informations d'identification identifient un procédé d'authentification qui correspond à un événement qui se produit conformément à une opération du terminal d'information (20), qui est effectuée par un utilisateur, et qui est partagée avec le terminal d'information (20) en association avec le procédé d'authentification ;
effectuer, lorsque les informations d'identification qui correspondent à l'événement qui s'est produit conformément à l'opération du terminal d'information (20) opérée par l'utilisateur sont reçues, l'authentification de l'utilisateur par l'intermédiaire du procédé d'authentification stocké en association avec les informations d'identification ;
crypter le résultat de l'authentification effectuée en utilisant les informations de clé stockées en association avec les informations d'identification ; et
transmettre un résultat de l'authentification au terminal d'information (20).

8. Programme qui, lorsqu'il est exécuté sur le dispositif de traitement d'informations (10), amène le dispositif de traitement d'informations (10) à exécuter un procédé d'authentification selon la revendication 7.
